# FASCICULE DE BREVET EUROPEEN

(11) **EP 2 918 911 B1**
(45) Date de publication et mention de la délivrance du brevet: **01.08.2018**
(21) Numéro de dépôt: 15159081.7
(22) Date de dépôt: 13.03.2015
(51) Int. Cl.: F23J 15/08, F23L 15/02, F23J 15/06

(54) **Procédé de combustion dans une installation thermique de combustion**
Verbrennungsprozess in thermischer Verbrennungsanlage
Combustion process in thermal combustion plant

(30) Priorité: 14.03.2014 FR 1452133
(43) Date de publication de la demande: 16.09.2015
(73) Titulaire: Pyraine, 33600 Pessac (FR)
(72) Inventeur: Ecalle, Olivier, 33000 BORDEAUX (FR)
(74) Mandataire: Regimbeau

(56) Documents cités:
- EP-A1- 0 162 199
- EP-A1- 2 561 921
- WO-A1-2006/087416
- US-A- 4 149 453

## Description

### DOMAINE TECHNIQUE GENERAL

La présente invention concerne un procédé de combustion dans une installation thermique de combustion améliorée.

### ETAT DE L'ART

Les centrales électriques de grande puissance sont des installations dans lesquelles de l'énergie thermique (fournie par des fumées de combustion, un réacteur nucléaire, un four de concentration des rayons solaires, etc.) est classiquement convertie en électricité via une turbine et un alternateur changeant l'état d'un fluide diphasique (qui est quasiment exclusivement l'eau dès lors que l'on dépasse l'ordre de grandeur du mégawatt pour la puissance électrique fournie) suivant le « cycle de Rankine ».

Les centrales dites « thermiques » ou « à flamme » utilisent un combustible (pétrole, gaz, fioul, biomasse, déchets, etc.) brûlé dans un foyer en présence d'air, éventuellement enrichi en oxygène. Une chaudière permet le transfert de chaleur depuis les fumées de combustion pour chauffer et vaporiser l'eau.

Dans des installations optimisées, ce cycle peut comprendre les étapes suivantes (les valeurs indiquées ci-dessous sont illustratives et non limitatives) :
- compression (110 bar) d'eau liquide (dite « eau d'alimentation ») par une pompe d'eau liquide;
- chauffage puis évaporation de cette eau dans la chaudière ;
- surchauffe de la vapeur produite (500°C) ;
- détente de cette vapeur dans une ou plusieurs turbines haute pression (jusqu'à abaisser la température à 8 bar), produisant une énergie mécanique ;
- resurchauffe de la vapeur d'eau (300°C) ;
- détente dans une ou plusieurs turbines basse pression, produisant encore de l'énergie mécanique ;
- condensation de la vapeur au niveau d'une « source froide » ;
- légère compression de l'eau liquide par une pompe dite « à condensats » ;
- passage de l'eau dans une bâche dégazante à une pression très légèrement supérieure à la pression atmosphérique (par exemple 1.2 bar);
- recompression de l'eau à 110 bar, etc.

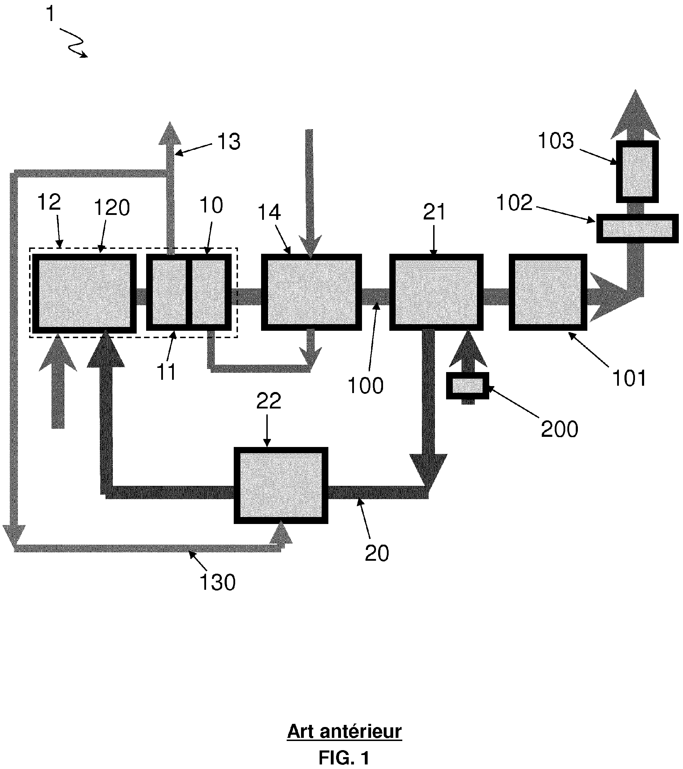

Que ce soit dans de telles centrales thermiques optimisées ou dans des installations plus modestes ne produisant que de l'eau chaude, ou un fluide caloporteur quelconque, les fumées qui sortent de la chaudière contiennent encore beaucoup d'énergie valorisable. Il est ainsi connu d'utiliser leur chaleur résiduelle pour préchauffer encore davantage l'eau liquide avant de l'envoyer dans la chaudière pour évaporation. Comme l'on voit sur la **figure 1** (qui sera décrit plus en détail plus loin), cela se fait généralement en utilisant un « économiseur » 14 qui est un échangeur eau/fumées conçu pour résister aux fumées de combustion.

Un autre échangeur 21 peut permettre également la récupération de la chaleur résiduelle des fumées pour préchauffer l'air de combustion (l'air frais chargé en oxygène qui est injecté dans le foyer).

Une installation de production électrique comprenant ce type d'échangeurs est par exemple connue de la demande de brevet US 2011/0094228. Une autre installation thermique reliée est divulguée dans le document de demande de brevet EP 2 561 921. Toutefois, les combustibles solides (charbon bois, paille, déchets ménagers, etc.) contiennent en quantités variables notamment du chlore, du soufre, et de l'azote qui se transforment en HCl, SO2, NO2, acide acétique, etc. lors de la combustion. Et, si les fumées sont en contact avec un point froid, de la condensation de ces composés acides peut survenir sur les parois d'un échangeur ou de la cheminée, ce qui va lentement mais surement les corroder. Des solutions techniques existent cependant pour protéger la cheminée contre la corrosion mais elles sont onéreuses (par exemple l'utilisation « d'uranus » qui est un alliage inoxydable très résistant à cette corrosion), et de façon générale on préfère prévenir toute corrosion.

Cette condensation acide est variable selon beaucoup de paramètres mais commence généralement en dessous de 120°C (point de rosée acide). Elle dépend des concentrations initiales du combustible en chlore, soufre, etc. qui sont variables selon les approvisionnements de l'usine (une simple bouteille de plastique PVC jetée par mégarde dans le combustible générera de l'acide chlorhydrique) et présente donc une incertitude lors du dimensionnement initial de la chaudière. D'autre part, les variations des conditions opératoires font qu'il y a également des fluctuations fréquentes de 5 à 10°C dans les températures des fumées qui sortent de la chaudière vers la cheminée.

C'est pourquoi une « marge de sécurité » sur la température de sortie des fumées est nécessaire lors de la conception afin d'éviter tout risque de condensation acide dans la cheminée, expliquant la température de 130/160°C que l'on rencontre fréquemment à la cheminée. Dans la demande de brevet US 2011/0094228 citée précédemment, cette température est de 157°C.

L'homme de l'art sait également refroidir fortement ces fumées afin de provoquer la condensation de la vapeur d'eau contenue dans les fumées. C'est ce qu'on appelle les chaudières « à condensation ». Si on peut valoriser de l'énergie à une température inférieure au point de rosée de la vapeur d'eau des fumées, qui est généralement autour de 55°C (par exemple via un réseau de chaleur dont l'eau revient à la chaufferie avec un fort débit et une très faible température, en particulier inférieure à 50°C) alors on récupère ainsi une quantité importante de chaleur, en minimisant les problèmes de corrosion. En effet, les acides vont se condenser mais seront très dilués par l'eau ce qui diminuera leur potentiel corrosif et permet l'évacuation rapide de ces condensats acides par gravité.

Ainsi, soit la température des fumées reste très élevée, soit on provoque sa condensation complète, mais à condition de disposer d'une source froide adéquate, ce qui est très rarement le cas pour les applications de chaudière à vapeur.

Dans tous les cas, l'énergie des fumées ne peut pas être valorisée en électricité. Il est en outre à noter que les composés acides sont des polluants et leur émission dans l'atmosphère est limitée par les réglementations. En effet, ils vont réagir avec l'eau atmosphérique et générer des pluies acides. Il est ainsi quelque fois nécessaire (en particulier en cas de combustion de fioul ou de charbon) d'installer des moyens de traitement chimique des fumées de sorte à éliminer ces composés.

Il serait ainsi souhaitable de disposer d'une solution permettant de valoriser une part plus importante de la chaleur des fumées, sans nécessiter une source froide très importante, sans risque de corrosion, et sans risque de pollution. Il serait par ailleurs souhaitable de valoriser cette chaleur à des niveaux de température compatibles avec un usage industriel.

### PRESENTATION DE L'INVENTION

Selon un premier aspect, est proposé un procédé de combustion dans une installation thermique, caractérisé en ce qu'il comprend des étapes de :
- combustion d'un combustible dans un foyer d'une chaudière alimentée en air de combustion via un circuit d'air de combustion ;
- échange thermique entre les fumées et de l'air de combustion au niveau d'un premier échangeur, le débit massique d'air de combustion étant supérieur au débit massique de fumées, de sorte à ce que les fumées présentent en sortie du premier échangeur une température inférieure à une température à laquelle débute une condensation de vapeur d'eau contenue dans les fumées ;
- séparation d'une phase liquide des fumées par des moyens de séparation ;
- injection d'air sec dans les fumées sortant des moyens de séparation.

Selon des caractéristiques avantageuses et non limitatives :
- le procédé comprend préalablement à la séparation de la phase liquide des fumées une étape de pulvérisation dans les fumées de gouttelettes d'eau de sorte à saturer les fumées en eau ;
- l'air sec injecté dans les fumées sortant des moyens de séparation est de l'air du circuit d'air de combustion ;
- le débit d'air de combustion injecté dans les fumées sortant des moyens de séparation est compris entre 10 et 40% du débit massique de l'air du circuit d'air de combustion circulant dans l'échangeur ;
- le débit massique d'air de combustion est compris entre 101 et 150%, avantageusement entre 120 et 140%, du débit massique de fumées dans un conduit d'évacuation des fumées de combustion ;
- le débit d'air dans le circuit d'air de combustion est régulé par un ventilateur disposé sur le circuit d'air de combustion, en fonction de mesures d'un capteur d'humidité ou d'acidité disposé dans les moyens de séparation ;
- les fumées présentent une température comprise entre 100°C et 180°C, avantageusement entre 120°C et 160°C, en entrée du premier échangeur ;
- le procédé comprend suite à l'étape de combustion des étapes de :
   - échange thermique entre les fumées et un fluide caloporteur d'un circuit principal ;
   - échange thermique entre les fumées et le fluide caloporteur du circuit principal par échange thermique au niveau d'un économiseur, de sorte à préchauffer le fluide caloporteur de circuit principal ;
- le procédé comprend en outre une étape d'échange thermique entre l'air de combustion sortant du premier échangeur et le fluide caloporteur d'une branche du circuit principal au niveau d'un deuxième échangeur ;
- le procédé comprend la production d'électricité par des moyens de génération d'électricité entraînés par au moins une turbine de détente du fluide caloporteur en phase gazeuse du circuit principal ;
- le procédé comprend une étape préalable de circulation du combustible dans un séchoir alimenté en chaleur via le circuit d'air de combustion ;
- le premier échangeur est de type échangeur à roue ;
- les moyens de séparation consistent en un cyclone ou un dévésiculeur. Ne faisant partie de l'objet revendiqué, il est décrit une installation thermique de combustion, comprenant :
   - une chaudière ;
   - un circuit d'air de combustion pour alimenter la chaudière ;
   - un conduit d'évacuation des fumées de combustion sur lequel est disposé un premier échangeur en échange thermique avec le circuit d'air de combustion ;
   l'installation étant caractérisée en ce que :
   - des moyens de séparation d'une phase liquide des fumées sont disposés sur le conduit d'évacuation des fumées de combustion en aval du premier échangeur ;
   - l'installation comprend en outre un circuit d'air sec disposé de sorte à injecter de l'air sec dans le conduit d'évacuation des fumées de combustion en aval des moyens de séparation ;
   - le circuit d'air de combustion est configuré pour présenter un débit massique d'air de combustion supérieur au débit massique de fumées dans le conduit d'évacuation des fumées de combustion, de sorte à ce que les fumées présentent en sortie du premier échangeur une température inférieure à la température à laquelle débute une condensation de vapeur d'eau contenue dans les fumées.

L'installation est avantageusement complétée par les caractéristiques suivantes, prises seules ou en une quelconque de leur combinaison techniquement possible :
- le circuit d'air sec est une branche du circuit d'air de combustion ;
- le circuit d'air sec prélève entre 10 et 40% du débit massique de l'air du circuit d'air de combustion circulant dans le premier échangeur ;
- le circuit d'air de combustion est configuré pour présenter un débit d'air de combustion compris entre 101 et 150%, avantageusement entre 120 et 140%, du débit massique de fumées dans le conduit d'évacuation des fumées de combustion ;
- la chaudière est configurée pour que les fumées présentent une température entre 100°C et 180°C, avantageusement entre 120°C et 160°C, en entrée du premier échangeur ;
- l'installation comprend en outre un ventilateur disposé sur le circuit d'air de combustion et un capteur d'humidité disposé dans les moyens de séparation, le ventilateur régulant le débit d'air dans le circuit d'air de combustion en fonction de mesures du capteur d'humidité ;
- l'installation comprend en outre un circuit principal sur lequel est disposé un générateur de vapeur en échange thermique avec la chaudière, un économiseur en échange thermique avec le circuit principal étant disposé sur le conduit d'évacuation des fumées de combustion en amont du premier échangeur ;
- l'installation comprend en outre un deuxième échangeur disposé sur le circuit d'air de combustion en aval du premier échangeur, le deuxième échangeur étant en échange thermique avec une branche du circuit principal ;
- l'installation est configurée pour une production d'électricité, et sont successivement disposés sur le circuit principal un surchauffeur en échange thermique avec la chaudière, au moins une turbine de détente de la vapeur, un condenseur et un compresseur de liquide, des moyens de génération d'électricité étant entraînés par l'au moins une turbine ;
- l'installation comprend en outre un séchoir dans lequel circule un combustible avant d'être introduit dans un foyer de la chaudière, le séchoir étant alimenté en chaleur via le circuit d'air de combustion ;
- le premier échangeur est de type échangeur à roue ;
- les moyens de séparation consistent en un cyclone ou un dévésiculeur ;
- l'installation comprend en outre des moyens de pulvérisation de gouttelettes d'eau dans les fumées disposés sur le conduit d'évacuation des fumées de combustion entre le premier échangeur et les moyens de séparation.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'une installation thermique conforme à l'art antérieur ;
- la figure 2 est un schéma s'appliquant à un mode de réalisation d'un procédé de combustion dans une installation thermique selon l'invention ;
- la figure 3 est un schéma d'un échangeur à roue.

### DESCRIPTION DETAILLEE

### Architecture générale

La **figure 1** représente une installation thermique 1 selon l'art antérieur, conforme au mode de réalisation optimisé décrit précédemment.

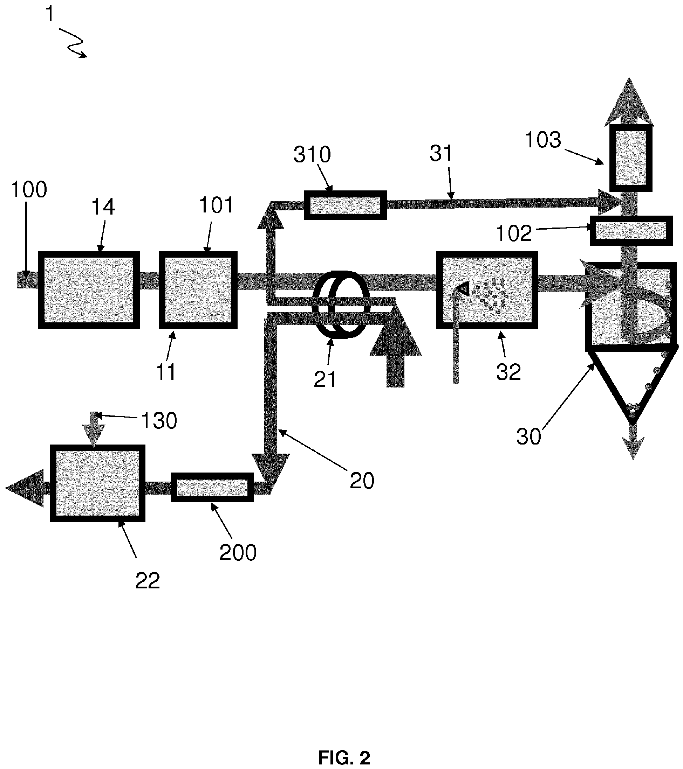

La **figure 2** représente un détail d'une installation 1 dans laquelle s'applique l'invention, correspondant en particulier à l'installation représentée à la figure 1, équipée en plus de moyens avancés de récupération de chaleur dans les fumées.

Cette installation 1 utilise l'énergie d'une combustion, que ce soit de gaz, de fioul, de pétrole, mais également de déchets ou de biomasse, cas qui seront discutés plus en détail plus loin. De façon préférée, l'installation 1 est une installation de production d'électricité, car ce sont les installations thermiques les plus importantes en taille et bénéficiant donc des meilleures technologies connues à ce jour, mais on peut comprendra qu'elle peut également ne faire que chauffer un fluide caloporteur, par exemple pour alimenter en vapeur un site industriel. La présente invention n'est limitée à aucune application, aucun fluide caloporteur et à aucun niveau de pression en particulier. Sa seule restriction est qu'on ne dispose pas d'une source froide permettant de valoriser l'essentiel de l'énergie de condensation des fumées. On prendra l'exemple d'une installation de production d'électricité utilisant un circuit de vapeur dans la suite de la présente description.

L'installation 1 comprend une chaudière 12 présentant un foyer 120, dans lequel le combustible est brulé. De tels foyers sont connus de l'homme du métier, et on comprendra qu'ils ne sont pas limitées à aucune géométrie ni dimensionnement particulier. La chaudière 12 est en échange thermique avec un circuit principal 13 au niveau d'au moins un générateur de vapeur 10. Ce circuit principal 13 est un circuit dans lequel circule en fluide caloporteur, en particulier de l'eau sous les états liquide et/ou gazeux (vapeur d'eau). Alternativement, le fluide caloporteur peut par exemple être de l'huile thermique. Dans la suite de la présente description, on prendra l'exemple préféré de l'eau, avec changement de phase liquide/vapeur. On définira la position des éléments sur ce circuit 13 selon le sens d'écoulement de l'eau liquide/vapeur : par exemple, par « vers l'amont », on entend selon le sens inverse de l'écoulement.

Le générateur de vapeur 10, au sein duquel l'eau (à haute pression) se vaporise en vapeur, est avantageusement suivi sur le circuit 13 d'un surchauffeur 11, situé également au niveau de la chaudière, au plus proche du foyer 120.

Le surchauffeur 10 est par exemple un échangeur gaz/gaz à tubes, permettant de monter en température la vapeur jusqu'à 500°C. Cette surchauffe prévient la condensation de la vapeur lors de son turbinage.

En sortie de la chaudière 12, un conduit d'évacuation des fumées de combustion 100 reçoit et transporte les fumées jusqu'à une cheminée 103 où elles sont rejetées dans l'atmosphère. Avant ce rejet, les fumées sont traitées via des moyens de traitement des fumées 101 (filtres et/ou unités chimiques), et passent dans un ventilateur d'exhaure 102 (également appelé ventilateur de tirage). On note que les moyens de traitement de fumées 101 et le ventilateur d'exhaure 102 peuvent être disposés plus en amont sur le conduit 100 (voir plus loin).

Au début du conduit 100, malgré le transfert de chaleur au surchauffeur 11 puis au générateur de vapeur 10, les fumées sont comme expliquées encore très chaudes.

### Economiseurs

Un premier échangeur 21 disposé sur le conduit 100 met en prise le conduit 100 avec un circuit d'air de combustion 20. Ce circuit 20 permet l'aspiration d'air frais atmosphérique chargé en oxygène pour injection dans le foyer 120 de la chaudière 12. Grâce à cet échangeur 21, cet air de combustion est préchauffé de sorte à réduire la quantité d'énergie consommée pour amener cet air à la température de combustion.

L'air de combustion peut être de l'air atmosphérique, mais également de l'air pressurisé et/ou de l'air enrichi en oxygène, voire de l'oxygène pur.

Il est important de noter que par « circuit d'air de combustion », on entend le circuit qui transporte au moins l'air nécessaire à la combustion, en d'autres termes que tout l'air transporté par ce circuit n'est pas forcément utilisé pour la combustion, comme il sera expliqué. Pour reformuler encore, il faut en effet distinguer « air de combustion », et « air consommé par la combustion », le premier désignant de façon générale la nature de l'air circulant dans le circuit de combustion 20 (apte à servir de comburant pour la combustion), alors que le second désigne l'air effectivement injecté dans le foyer 120 au bout du circuit d'air de combustion, et consommé en tant que comburant. Tout l'air appelé « air de combustion » n'est ainsi pas forcément in fine injecté dans le foyer 120, et le débit d'air de combustion circulant dans le premier échangeur 21 est généralement supérieur au débit d'air consommé par la combustion.

Comme l'on verra plus loin, le premier échangeur 21 est avantageusement de type échangeur à roue.

Un économiseur 14 tel que décrit précédemment peut être disposé en entrée du conduit 100, pour préchauffer l'eau liquide qui entre dans le générateur de vapeur 10. En sortie de l'économiseur 14 (et ainsi en entrée du premier échangeur 21), on peut trouver les moyens de traitement des fumées 101, comme l'on voit sur la figure 2.

Il est à noter qu'un deuxième échangeur 22 peut être disposé sur le circuit d'air de combustion 20 en aval du premier échangeur 21 pour chauffer encore l'air de combustion (typiquement au-delà de 150°C), le deuxième échangeur 22 étant en échange thermique avec une branche 130 du circuit principal.

Par ailleurs, si le foyer 120 brûle un combustible humide tel que de la biomasse, l'installation 1 peut comprendre en outre un séchoir dans lequel circule le combustible avant d'être introduit dans un foyer 120 de la chaudière 12. Le séchoir permet de réduire la fraction d'eau dans le combustible pour limiter la consommation d'énergie dans le foyer pour faire évaporer cette fraction d'eau. Le séchoir est préférentiellement alimenté en chaleur via le circuit d'air de combustion 20. De façon préférée, il s'agit d'un séchoir à contact direct dans lequel est injecté de l'air chauffé d'une branche du circuit 20. Alternativement, il s'agit d'un simple échange thermique.

### Echangeur à roue

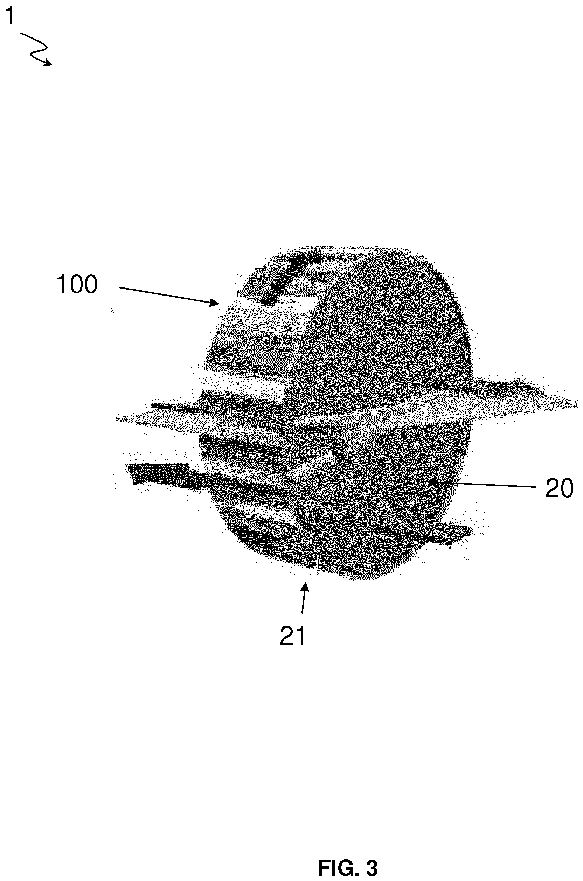

Un « échangeur à roue », ou « échangeur rotatif » est un type d'échangeur constitué d'une roue au travers laquelle les fumées passent et chauffent ainsi un matériau solide qui y est inclus. Un exemple est représenté sur la **figure 3****.** La rotation de la roue fait ensuite passer ce matériau chauffé dans le flux d'air froid. Il y cède ainsi sa chaleur, puis retourne se réchauffer dans les fumées en continuant sa rotation.

Ainsi, ces échangeurs servent d'accumulateur thermique pour faire passer la chaleur du côté chaud vers le coté froid. Ils sont donc très peu sensibles à la corrosion puisque le matériau utilisé a une fonction de stockage thermique sans nécessité d'intégrité mécanique.

Les échangeurs rotatifs ont cependant quelques inconvénients :
- des performances thermiques plus faibles (maximum d'efficacité de 80 %) qu'un échangeur classique à contre-courant,
- des fuites de gaz d'un côté vers l'autre, qui peuvent être limitées mais pas totalement supprimées, ce qui rend leur utilisation rédhibitoire lorsque une étanchéité parfaite est nécessaire.

Dans la présente installation 1, ces inconvénients ne sont pas gênants, en particulier si les moyens de traitement 101 sont disposés en amont du premier échangeur 21 : une partie des fumées peut être mêlée sans souci à l'air de combustion. Par contre, les avantages, et en particulier la résistance à la corrosion, sont très appréciables.

De manière similaire, on peut utiliser comme premier échangeur 21 des échangeurs où on fait passer alternativement les fumées et l'air dans des colonnes fixes emplies d'un garnissage qui fait là aussi office de stockage thermique. Les fumées chaudes chauffent cette matrice solide puis lorsque celle-ci est totalement chauffée, l'air froid est introduit dans la colonne, tandis que les fumées chaudes passent dans une deuxième colonne qui a été précédemment refroidie par l'air.

Ici ce sont donc les gaz qui alternent entre des stockages d'énergie fixes, à l'inverse de la roue qui fait tourner le stockage d'énergie avec des circuits gazeux fixes.

### Début de condensation

La présente installation présente l'objectif paradoxal que les fumées sortent de cet échangeur 21 à une température assez basse pour que la condensation de l'eau ait tout juste commencé à se produire (typiquement 55°C).

Ce faisant les acides sont alors majoritairement présents dans les fumées sous une forme de fines gouttelettes liquides.

Le fait d'aller jusqu'à la condensation de l'eau permet aux acides (qui sont généralement hygroscopiques) de se mélanger avec l'eau et d'obtenir des gouttelettes plus grosses, donc moins agressives car diluées et qu'il va être ainsi possible de séparer des fumées et d'écarter de façon surprenante tout risque de corrosion, comme on le verra plus tard.

Il s'agit d'une position intermédiaire entre les arts antérieurs qui proposaient soit une absence de condensation (évacuation des acides dans l'atmosphère ou via traitement chimique), soit une condensation complète (évacuation des acides via les condensats à une température basse).

Pour cela, la demanderesse a constaté que dans la majorité des cas de combustion de solides, il existe un ratio de 1,2 à 1,4 entre le tonnage (i.e. débit massique exprimé en Tonnes par heure) des fumées et celui de l'air nécessaire à la combustion (en d'autres termes, le débit d'air de combustion est compris entre 70 et 85% du débit de fumées dans le conduit d'évacuation), suivant la teneur en oxygène résiduel dans les fumées (typiquement 3 à 6 %) et la teneur en eau du combustible (de 20 à 60 % de son poids dans le cas de bois et 15 à 25 % pour du charbon, etc.).

On note que le tonnage de fumées mentionné est celui en sortie de la chaudière 12, en amont de toute éventuel mélange avec de l'air injecté (voir plus loin).

Afin de donner des ordres de grandeur, nous prenons comme exemple la combustion de 3,8 Tonnes/heure d'une biomasse comprenant 40 % en masse d'eau liquide (cas classique) présente dans les fibres de cette biomasse :
- l'énergie de la chaleur sensible (sans condensation de l'eau des fumées) apportée par le combustible est appelée Pouvoir Calorifique Inférieur (PCI), vaut 10 000 kW ;
- le rendement de la chaudière est de 90 % (chaleur valorisée par la chaudière (soit 9 000 kW) divisée par l'énergie PCI entrante dans le foyer (10 000 kW)) et les fumées sortent alors à 160°C vers la cheminée contenant encore 1 000 kW de chaleur sensible, le débit de ces fumées est de 21,8 Tonne/heure (dans un but didactique, les diverses pertes ne sont pas prises en compte) ;
- le débit d'air de combustion est de 18 T/h, ce qui représente un tonnage égal à 83 % de celui des fumées et l'énergie nécessaire pour chauffer cet air de 20°C à 100°C représente 4 % de l'énergie PCI du combustible.

Or, du fait de la teneur en eau du combustible introduit, et de la formation d'eau par réaction entre l'hydrogène contenu dans le combustible et l'oxygène de l'air, alors les fumées ont un point de rosée (condensation de l'eau des fumées) généralement compris entre 50 et 60°C.

Pour reprendre l'exemple numérique précédent, l'énergie de la chaleur latente de condensation (c'est à dire l'énergie récupérable par condensation totale de la vapeur d'eau) représente 18 % de l'énergie PCI entrante. L'énergie totale introduite par le combustible dans le foyer (dite Pouvoir Calorifique Supérieure, PCS) est donc de 10 000 * 1,18 = 11 800 kW. Cette condensation de la vapeur d'eau commence à une température de 58°C, et 40 % de cette chaleur latente sera fournie par les fumées si elles sont refroidies jusqu'à 50°C, un condenseur « habituel » permet donc de passer le rendement sur PCI de 90 % à 103 % par le gain sur le sensible et le latent. La quantité d'eau condensée est de 1 Tonne/heure, pour des quantités d'acides de l'ordre de grandeur du kilo/heure selon les combustibles (ce qui montre qu'ils représentent bien un danger pour les parois s'ils ne sont pas bien dilués par l'eau).

On constate donc que chauffer l'air de combustion de 20 °C à 100°C ne représente que 21 % de l'énergie de condensation et 40 % de la chaleur sensible des fumées. Cela montre qu'un réchauffeur d'air nécessaire à la combustion à partir des fumées ne peut baisser la température de celles-ci que de 60°C environ.

Si on utilise le débit d'air de combustion habituel à l'homme du métier, à savoir environ 80% du débit de fumées (donc avec un dimensionnement plus petit et un coût d'investissement moindre pour cet échangeur) à savoir le débit juste nécessaire à la combustion, on ne condense pas l'eau des fumées (sauf avec des biomasses très humides et un air atmosphérique très froid, ce qui est un cas rare) et on obtient donc des fumées refroidies de 160 à 90°C environ qui contiendront de micro gouttelettes d'acides très concentrés et agressives qui sont difficiles à séparer des fumées et iront corroder la cheminée.

La Demanderesse a constaté de façon contraire à la pratique habituelle que l'utilisation d'un débit d'air plus important que celui des fumées (en particulier jusqu'à 70% plus élevé que dans l'art antérieur, i.e. jusqu'à 30 T/h dans le cas de l'exemple précédent) permet d'atteindre de manière certaine le début de condensation de l'eau des fumées.

En effet, la demanderesse constate que la capacité calorifique des fumées est supérieure à celle de l'air dans un rapport habituel de 1,1. Autrement dit, si le même tonnage d'air et de fumées passent dans un échangeur de chaleur, une hausse de 100°C de l'air correspondra à une baisse de température des fumées de 100 / 1,1 = 90°C.

En d'autres termes, il est possible de contrôler de façon fiable la quantité de chaleur transférée des fumées à l'air de combustion au niveau du premier économiseur 21 via le contrôle du débit (massique) d'air de combustion.

En particulier, au vu des éléments numériques précédents, il suffit que le circuit d'air de combustion 20 présente un débit d'air de combustion un peu supérieur au débit de fumées dans le conduit d'évacuation des fumées de combustion 100 (on entend le débit massique des fumées au niveau du premier échangeur 21), pour que les fumées présentent en sortie du premier échangeur 21 une température inférieure à la température de rosée, en d'autres termes la température à laquelle la vapeur d'eau des fumées commence à se condenser (typiquement 55°C). De façon préférée, le circuit d'air de combustion 20 est configuré pour présenter un débit (massique) d'air (air ambiant) de combustion compris entre 101 et 150%, voire entre 110 et 150% (avantageusement entre 120 et 140%, encore plus avantageusement entre 125 et 135%) du débit de fumées dans le conduit d'évacuation des fumées de combustion 100, de sorte à amener les fumées à la température optimale pour le début de la condensation.

Dans notre exemple, l'application d'un débit d'air de combustion environ égal à 130% du débit de fumées fait que ces dernières sont refroidies de plus de 100°C (elles descendent jusqu'à environ 55°C, à savoir le début de la condensation de l'eau). A titre d'ordre de grandeur, on condense environ 200 kilo/heure d'eau, ce qui représente cinq fois moins que dans un condenseur habituel, mais permet d'avoir un débit d'eau deux cents fois plus important que celui des acides. Cette eau permettra de protéger l'échangeur rotatif qui, bien que peu sensible à la corrosion, finirait quand même par être endommagé.

L'objectif de ce sur-débit est de démarrer la condensation de l'eau, de récupérer une petite partie de son énergie et de permettre la dilution des acides condensés.

Le réglage du débit se fait aisément par exemple grâce à un ventilateur 200 disposé sur le circuit d'air de combustion 20. Ce ventilateur 200 peut être relié au ventilateur d'exhaure de sorte à imposer les ratios de débits mentionnés précédemment. Alternativement ou en complément, le ventilateur 200 peut être connecté à un capteur d'humidité (voir plus loin).

Il est à noter qu'il peut sembler à première vue impossible d'avoir un débit d'air de combustion supérieur à celui des fumées, mais il faut se rappeler que tout l'air appelé « air de combustion » n'est pas forcément de « l'air consommé par la combustion » in fine injecté dans le foyer 120 (voir plus loin). On comprendra par conséquent que le fait d'avoir un débit d'air de combustion supérieur au débit de fumées est bien le résultat d'une configuration particulière du circuit 20, et non un mode de fonctionnement : partant d'une installation connue avec un échangeur air de combustion/fumées ordinaire (par exemple avec un débit d'air de combustion de l'ordre de 80% du débit de fumées), il est impossible de simplement pousser le débit d'air de combustion jusqu'aux niveaux décrits dans la présente description (aucune installation existante n'est prévue pour supporter telle quelle un débit d'air de combustion aussi élevé, qui la rendrait inopérante). La variation de débit est en effet de l'ordre de 50-70%.

Il est donc possible de reprendre pour la présente installation 1 la partie chaudière 12 d'une installation existante (ce qui est avantageux dans la mesure où les chaudières connues sont généralement déjà configurées pour que les fumées présentent en sortie une température comprise entre 100 et 180°, typiquement entre 120 et 160°C), mais il est alors indispensable de prévoir une nouvelle architecture du circuit 20 pour que l'installation puisse fonctionner conformément au procédé de l'invention.

### Séparation

L'installation 1 comprend en outre des moyens de séparation 30 (ou « séparateur ») d'une phase liquide des fumées qui sont disposés sur le conduit d'évacuation des fumées de combustion 100 en aval du premier échangeur 21, comme l'on voit sur la figure 2.

Ces moyens 30 permettent une séparation entre les fumées et les condensats, et consistent préférentiellement en un « cyclone ». Dans un tel cyclone, les fumées sont accélérées et mises en rotation, ce qui fait que les gouttelettes sont projetées du fait de leur densité sur la paroi du cyclone et s'écoulent ensuite vers le bas de celui-ci, alors que les fumées s'évacuent par le haut et au milieu du cyclone.

De nombreuses autres technologies de moyens de séparation 30 sont connues de l'homme du métier. On citera par exemple les dévésiculeurs qui présentent une structure très poreuse de fibres généralement métalliques. Les fumées le traversent et les gouttelettes finissent par percuter ces fibres et coulent ensuite par gravité le long de ces fibres et peuvent ainsi être éliminées en bas du séparateur.

L'ensemble formé du premier échangeur 21 et des moyens de séparation 30 sera avantageusement disposé entre les moyens de traitement des fumées 101 (ce qui évite d'avoir des boues dans les moyens de séparation 30) et le ventilateur d'exhaure 102. En effet, c'est là que la pression des fumées est la plus faible, faisant ainsi que ce sera de l'air qui fuira vers les fumées dans l'échangeur 21 et pas l'inverse.

Alternativement, si la dépression causée par le ventilateur d'exhaure 102 est trop forte, ce dernier peut être placé à coté des moyens de traitement des fumées 101, en entrée de l'échangeur 21.

Pour contrôler facilement l'installation 1, un capteur d'humidité (non représenté) relié au ventilateur 200 peut être disposé au niveau des moyens de séparation 30 : si ce capteur ne détecte pas assez d'eau condensée, un signal est envoyé au ventilateur 200 de sorte à augmenter le débit d'air de combustion.

De même, on peut utiliser des analyseurs de l'acidité des fumées (ou des condensats) et réguler les débits en fonction de cette mesure : plus le combustible contient soufre, chlore, etc., et plus on devra condenser de l'eau des fumées afin de bien les éliminer.

Plus précisément, des moyens de traitement de données peuvent collecter les données de pression dans les circuits 20 et 100 et les données du capteur d'humidité, ou d'acidité et envoyer en conséquent des signaux de commande au ventilateur 200 de sorte à réguler le débit d'air de combustion dans le circuit 20. Ces moyens de traitement peuvent également être reliés au ventilateur d'exhaure 102 de sorte à disposer du débit de fumées.

### Pulvérisation

De façon optionnelle mais préférée, l'installation 1 comprend en outre comme on le voit à la figure 2 des moyens de pulvérisation 32 de gouttelettes d'eau dans les fumées disposés sur le conduit d'évacuation des fumées de combustion 100 entre le premier échangeur 21 et les moyens de séparation 30.

L'idée est de réaliser avant le séparateur fumées / condensats une saturation complète de ces fumées par une injection d'eau sous forme de micro-gouttelettes, qui permettra la dilution totale des condensats acides dans l'eau. Ces moyens de pulvérisation 32 peuvent être vus comme des moyens de saturation en eau des fumées.

En effet, il est connu que des micro-gouttelettes d'eau, du fait de leur énorme surface de contact même avec un faible débit massique présentent une grande affinité à la fois avec des acides mais également (dans certaines circonstances) avec des microparticules de poussières.

L'objectif de ces moyens de pulvérisation 32 est d'accroître encore plus la baisse des émissions de l'installation en polluants acides dans l'atmosphère à un moindre coût.

### Injection d'air

On obtient en sortie des moyens de séparation 30 :
- d'une part des fumées saturées en vapeurs d'eau et d'acides (mais avec des teneurs en acides beaucoup plus basses qu'initialement), à une température de 50 à 60°C.
   L'injection directe de ces fumées dans la cheminée provoquerait un début immédiat de condensation acide puisque ses parois sont très légèrement plus froides que les fumées et que les vapeurs sont saturées.
- d'autre part une phase liquide qui concentre l'essentiel des acides des fumées, et qui pourra être facilement neutralisée avant d'être rejetée.

Par ailleurs, on obtient également de l'air de combustion chauffé à 100 - 120°C en quantité importante.

L'installation 1 comprend par conséquent un circuit d'air sec 31 disposé de sorte à injecter de l'air sec dans le conduit d'évacuation des fumées de combustion 100 en aval des moyens de séparation 30, i.e. on mélange cet air sec avec les fumées saturées.

Ce faisant, on évite le risque de condensation ultérieure dans la cheminée 103 pour au moins deux raisons :
o d'abord les moyens de séparation 30 ont permis de condenser puis évacuer des fumées l'essentiel des acides qui y étaient contenus, et les fumées ont alors un pouvoir corrosif beaucoup plus faible,
o la dilution des fumées avec de l'air diminue la pression partielle des vapeurs d'eau et d'acides, abaissant ainsi leurs températures respectives de condensation en dessous de la température à laquelle elles sont sorties du séparateur.

Cet air sec peut être de l'air atmosphérique, mais de façon particulièrement préférée, il s'agit d'air du circuit de combustion 20. Comme l'on voit sur la figure 2 le circuit d'air sec 31 est pour cela une branche du circuit d'air de combustion 20.

De façon préférée, cette branche prélève entre 10 et 40% (en tonnage, i.e. en débit massique), avantageusement entre 20 et 40%, plus avantageusement entre 20 et 30%, de l'air du circuit d'air de combustion 20. Alternativement, le taux peut être choisi de sorte à prélever le surplus d'air de combustion (en d'autres termes, la partie non prélevée correspond exactement à l'air de combustion nécessaire au foyer 120). Ce taux peut être contrôlé par un ventilateur 310.

De façon encore plus préférée et complémentaire, si l'échangeur 21 est un échangeur à roue il permet de faire passer plusieurs courants gazeux différents au travers de la roue. On pourra ainsi faire passer l'air qui sera ensuite injecté dans les fumées (air du circuit d'air sec 31) au contact immédiat des fumées (en d'autres termes, séparer la branche 31 du reste du circuit 20 en amont de l'échangeur 21). Ainsi, on réalise un « sas gazeux » entre les fumées et l'air de combustion qui sera valorisé pour un autre usage sans être pollué.

Dans tous les cas, le recours à l'air de combustion est très avantageux, car d'une part l'air de combustion est en très grande quantité, et d'autre part le fait que cet air de combustion soit chaud (au delà de 100°C) permet d'éviter le risque de condensation ultérieure dans la cheminée 103 pour au moins deux nouvelles raisons :
∘ l'air de combustion chaud réchauffe d'une dizaine de degrés les fumées. Les fumées s'éloignent donc de 12 à 15°C du début de condensation à la fois pour l'eau et les acides, et ce quelles que soient leurs concentrations, ou les fluctuations des températures des fumées sortant de la chaudière.
∘ Le mélange avec l'air de combustion chaud permet aux gouttelettes acides qui auraient pu traverser le séparateur avec les fumées de se ré-évaporer au lieu d'aller se déposer sur la cheminée.

Ce faisant, on peut alors injecter ces fumées dans une cheminée 103 construite en un matériau peu onéreux, typiquement du Corten sans risque de condensation et donc de corrosion.

On remarque par ailleurs que le fait d'utiliser de l'air de combustion fait que l'air réellement injecté dans le foyer 120 (et effectivement utilisé pour la combustion) présente un débit in fine inférieur à celui des fumées, ce qui résout le paradoxe apparent évoqué précédemment.

Dans tous les cas, en fonction des conditions techniques, économiques et environnementales des installations concernées, on pourra alors procéder aux opérations suivantes non exclusives les unes des autres :
- Utilisation directe de l'air préchauffé dans le foyer de combustion, (éventuellement suite au réchauffage supplémentaire avec de la vapeur d'eau dans le deuxième échangeur 22). Cette utilisation est particulièrement préférée lorsque le dimensionnement initial de la chaudière 12 ne prévoyait pas de réchauffage d'air par les fumées dans un premier échangeur 21 mais uniquement par un deuxième échangeur 22 alimenté par le circuit principal 13 (ou même sans aucun réchauffage d'air) et que les fumées du conduit 100 sortent de l'économiseur 14 ou de la chaudière 12 (s'il n'y a pas non plus d'économiseur 14) à la température de 120 à 160°C.
- Injection de l'air chauffé dans un séchoir à contact direct afin d'y pré-sécher le combustible humide avant son introduction dans le foyer de combustion (déjà évoquée)
- Toute autre application de chauffage, si l'on a encore de l'air de combustion en surplus.

Ce faisant, on voit donc que l'on peut valoriser de différentes manières la chaleur résiduelle des fumées sans problématique de corrosion de la cheminée ou des échangeurs.

Ainsi, on obtient par cette architecture innovante d'installation 1 deux objectifs intéressants :
- un gain énergétique de 4 à 5 % environ,
- une réduction de plus de 90 % des émissions atmosphériques en vapeurs acides de cette installation de combustion responsables de la pollution de l'air.

Le tout est obtenu sans investissement conséquent, dans la mesure où aucun matériau onéreux n'est nécessaire.

Il est à noter que l'on connait des injections d'air sec avant une cheminée pour des objectifs qui n'ont rien à voir avec ceux cherchés ici : la diminution de panache. Dans certain cas (après un condenseur classique où les fumées sortent donc de celui-ci à 45 - 50°C environ), l'éjection dans l'atmosphère plus froide de fumée saturée en vapeur d'eau mène immédiatement à une condensation supplémentaire en sortie de cheminée créant un panache de fumées blanche très visible. Bien qu'inoffensif, ce panache perturbe visuellement les voisins et est un motif de rejet sociétal des chaudières, c'est pourquoi il est courant d'utiliser un dispositif supplémentaire de réduction de panache qui consiste à refroidir encore plus les fumées jusqu'à environ 20°C (via un échangeur de chaleur avec de l'air extérieur), ce qui permet de condenser fortement les fumées, avant de les mélanger avec de l'air sec et devenu tiède. On comprendra bien que de tels dispositifs de réduction de panache mettent en oeuvre des niveaux de température très différents et nécessitent déjà des fumées exemptes d'acides.

On notera également que ce dispositif nécessite - du fait du faible écart de température entre l'air tiède et les fumées - un très fort excès d'air : le débit d'air est typiquement trois fois celui des fumées, ce qui est très différent de ce qui est mis en oeuvre dans la présente installation 1.

Cet air sec et tiède n'est pas utilisé pour la combustion de la biomasse. Il ne peut donc être qualifié d'air de combustion.

### Procédé

L'invention concerne un procédé de selon la définition des revendications, applicable dans une installation thermique 1 telle que décrite précédemment.

Ce procédé comprend des étapes de :
- combustion d'un combustible dans un foyer 120 d'une chaudière 12 alimentée en air de combustion via un circuit d'air de combustion 20 ;
- éventuellement, échange thermique entre les fumées et de l'eau d'un circuit principal 13 (chauffé par la chaudière) au niveau d'un économiseur 14 ;
- la fumée de combustion est envoyée vers un premier échangeur 21 dans un conduit 100 à une température typiquement comprise entre 120 et 160°C ;
- échange thermique entre les fumées et de l'air de combustion au niveau du premier échangeur 21 (typiquement un échangeur à roue), le débit (massique) d'air de combustion étant supérieur au débit de fumées (typiquement 101 à 150% de ce débit, avantageusement 120 à 140%, et encore plus avantageusement 125 à 135%), de sorte à ce que les fumées présentent en sortie du premier échangeur 21 une température inférieure à une température à laquelle débute une condensation de vapeur d'eau contenue dans les fumées (en d'autres termes, les premières gouttes de condensation d'eau apparaissent) ;
- avantageusement, pulvérisation dans les fumées de gouttelettes d'eau de sorte à saturer les fumées en eau (par des moyens de pulvérisation 32)
- séparation d'une phase liquide des fumées par des moyens de séparation 30 (par exemple un cyclone) ;
- injection d'air sec dans les fumées sortant des moyens de séparation 30. Cet air sec peut être de l'air de combustion sortant de l'échangeur 21 au niveau d'une branche 31 du circuit d'air de combustion 20 (à hauteur de 10 à 40% du débit d'air circulant dans le circuit 20, avantageusement 20 à 30%).

## Revendications

1. Procédé de combustion dans une installation thermique (1), comprenant des étapes de :
- combustion d'un combustible dans un foyer (120) d'une chaudière (12) alimentée en air de combustion via un circuit d'air de combustion (20) ;
- échange thermique entre les fumées et de l'air de combustion au niveau d'un premier échangeur (21),
- séparation d'une phase liquide des fumées par des moyens de séparation (30) ;
- injection d'air sec dans les fumées sortant des moyens de séparation (30), caractérisé en ce-que
le débit massique d'air de combustion étant supérieur au débit massique de fumées, de sorte à ce-que les fumées présentent en sortie du premier échangeur (21) une température inférieure à une température à laquelle débute une condensation de vapeur d'eau contenue dans les fumées.

2. Procédé selon la revendication 1, comprenant préalablement à la séparation de la phase liquide des fumées une étape de pulvérisation dans les fumées de gouttelettes d'eau de sorte à saturer les fumées en eau.

3. Procédé selon l'une des revendications 1 et 2, dans lequel l'air sec injecté dans les fumées sortant des moyens de séparation (30) est de l'air du circuit d'air de combustion (20).

4. Procédé selon la revendication 3, dans lequel le débit d'air de combustion injecté dans les fumées sortant des moyens de séparation (30) est compris entre 20 et 50% du débit massique de l'air du circuit d'air de combustion (20) circulant dans l'échangeur (21).

5. Procédé selon l'une des revendications 1 à 4, dans lequel le débit massique d'air de combustion est compris entre 101 et 150% du débit massique de fumées dans un conduit d'évacuation des fumées de combustion (100).

6. Procédé selon la revendication 5, dans lequel le débit massique d'air de combustion est compris entre 120 et 140% du débit massique de fumées dans le conduit d'évacuation des fumées de combustion (100).

7. Procédé selon l'une des revendications 1 à 6, dans lequel le débit d'air dans le circuit d'air de combustion (20) est régulé par un ventilateur (200) disposé sur le circuit d'air de combustion (20), en fonction de mesures d'un capteur d'humidité ou d'acidité disposé dans les moyens de séparation (30).

8. Procédé selon l'une des revendications 1 à 7, dans lequel les fumées présentent une température comprise entre 120°C et 160°C en entrée du premier échangeur (21).

9. Procédé selon l'une des revendications 1 à 8, comprenant suite à l'étape de combustion des étapes de :
- échange thermique entre les fumées et un fluide caloporteur d'un circuit principal (13) ;
- échange thermique entre les fumées et le fluide caloporteur du circuit principal (13) par échange thermique au niveau d'un économiseur (14), de sorte à préchauffer le fluide caloporteur du circuit principal (13).

10. Procédé selon la revendication 9, comprenant en outre une étape d'échange thermique entre l'air de combustion sortant du premier échangeur (21) et le fluide caloporteur d'une branche (130) du circuit principal (13) au niveau d'un deuxième échangeur (22).

11. Procédé selon l'une des revendications 9 et 10, dans lequel le fluide caloporteur est de l'eau, le procédé comprenant la production d'électricité par des moyens de génération d'électricité entraînés par au moins une turbine de détente de la vapeur du circuit principal (13).

12. Procédé selon l'une des revendications 1 à 11, comprenant une étape préalable de circulation du combustible dans un séchoir alimenté en chaleur via le circuit d'air de combustion (20).

13. Procédé selon l'une des revendications 1 à 12, dans lequel le premier échangeur (21) est de type échangeur à roue.

14. Procédé selon l'une des revendications 1 à 13, dans lequel les moyens de séparation (30) consistent en un cyclone ou un dévésiculeur.

## Patentansprüche

1. Verbrennungsverfahren in einer thermischen Anlage (1), umfassend Schritte:
- Verbrennung eines Brennstoffs in einem Ofen (120) eines Heizkessels (12), der über einen Verbrennungsluft-Kreislauf (20) mit Verbrennungsluft versorgt wird;
- thermischer Austausch zwischen dem Rauch und der Verbrennungsluft an einem ersten Tauscher (21),
- Trennung einer flüssigen Phase des Rauchs durch Trennmittel (30);
- Einspritzen von trockener Luft in den aus den Trennmitteln (30) austretenden Rauch,
**dadurch gekennzeichnet, dass** der Massendurchsatz der Verbrennungsluft den Massendurchsatz des Rauchs derart übersteigt, dass der am Ausgang des ersten Tauschers (21) vorhandene Rauch eine niedrigere Temperatur als eine Temperatur hat, an der eine Dampfkondensation von in dem Rauch enthaltenen Wasser beginnt.

2. Verfahren gemäß Anspruch 1, umfassend vorab bei der Trennung der flüssigen Phase von dem Rauch einen Sprühschritt von Wassertröpfchen in dem Rauch derart, dass der Rauch mit Wasser gesättigt wird.

3. Verfahren gemäß einem der Ansprüche 1 und 2, bei dem die trockene Luft, die in den aus den Trennmitteln (30) austretenden Rauch eingespritzt wird, die Luft des Verbrennungsluft-Kreislaufs (20) ist.

4. Verfahren gemäß Anspruch 3, bei dem der Verbrennungsluftdurchsatz, der in den aus den Trennungsmitteln (30) austretenden Rauch eingespritzt wird, zwischen 20 und 50 % des Massedurchsatzes des in dem Tauscher (21) umlaufenden Verbrennungsluft-Kreislaufs (20) inbegriffen ist.

5. Verfahren gemäß einem der Ansprüche 1 bis 4, bei dem der Massedurchsatz der Verbrennungsluft zwischen 101 und 150 % des Massedurchsatzes des Rauchs in einer Austragsleitung des Verbrennungsrauchs (100) inbegriffen ist.

6. Verfahren gemäß Anspruch 5, bei dem der Massedurchsatz der Verbrennungsluft zwischen 120 und 140 % des Massedurchsatzes des Rauchs in der Austragsleitung des Verbrennungsrauchs (100) inbegriffen ist.

7. Verfahren gemäß einem der Ansprüche 1 bis 6, bei dem der Luftdurchsatz in dem Verbrennungsluftkreislauf (20) durch einen Ventilator (200) geregelt ist, der auf dem Verbrennungsluft-Kreislauf (20) in Abhängigkeit von Messungen eines Feuchtigkeits- oder Säuregehaltsensors angeordnet ist, der in den Trennmitteln (30) angeordnet ist.

8. Verfahren gemäß einem der Ansprüche 1 bis 7, bei dem der Rauch eine zwischen 120° C und 160° C am Eingang des ersten Tauschers (21) inbegriffene Temperatur aufweisen.

9. Verfahren gemäß einem der Ansprüche 1 bis 8, umfassend im Anschluss an den Verbrennungsschritt Schritte:
- thermischer Austausch zwischen dem Rauch und einem Heizmedium eines Hauptkreislaufs (13);
- thermischer Austausch zwischen dem Rauch und dem Heizmedium des Hauptkreislaufs (13) per thermischem Austausch bei einem Vorwärmer (14) derart, dass das Wärmemedium des Hauptkreislaufs (13) vorgewärmt wird.

10. Verfahren gemäß Anspruch 9, umfassend darüber hinaus einen thermischen Austauschschritt zwischen der aus dem ersten Tauscher (21) austretenden Verbrennungsluft und dem Heizmedium eines Zweigs (130) des Hauptkreislaufs (13) an einem zweiten Tauscher (22) .

11. Verfahren gemäß einem der Ansprüche 9 und 10, bei dem das Heizmedium Wasser ist, wobei das Verfahren die Stromerzeugung durch Stromerzeugungsmittel, die durch wenigstens eine Abzugsturbine des Dampfes des Hauptkreislaufs (13) angetrieben werden, umfasst.

12. Verfahren gemäß einem der Ansprüche 1 bis 11, umfassend einen vorherigen Umlaufschritt des Brennstoffs in einem Trockner, der über den Verbrennungsluft-Kreislauf (20) versorgt wird.

13. Verfahren gemäß einem der Ansprüche 1 bis 12, bei dem der erste Tauscher (21) vom Typ Tauscher mit Rad ist.

14. Verfahren gemäß einem der Ansprüche 1 bis 13, bei dem die Trennmittel (30) aus einem Zyklon oder einem Tropfenabscheider bestehen.

## Claims

1. A combustion method in a thermal plant (1), comprising steps of:
- combusting a fuel in a furnace (120) of a boiler (12) supplied with combustion air via a combustion air circuit (20);
- exchanging heat between the fumes and combustion air at a first exchanger (21),
- separating a liquid phase from the fumes by separation means (30);
- injecting dry air into the fumes exiting the separation means (30),
**characterised in that**
the combustion air mass flow rate is higher than the fumes mass flow rate, such that the fumes have at the inlet of the first exchanger (21) a temperature lower than a temperature at which a condensation of the water vapour contained in the fumes begins.

2. The method according to claim 1, comprising prior to separating the liquid phase from the fumes, a step of spraying water droplets into the fumes so as to saturate the fumes with water.

3. The method according to one of claims 1 and 2, wherein the dry air injected into the fumes exiting the separation means (30) is air from the combustion air circuit (20).

4. The method according to claim 3, wherein the combustion air flow rate injected into the fumes exiting the separation means (30) is between 20 and 50% of the air mass flow rate of the combustion air circuit (20) circulating in the exchanger (21).

5. The method according to one of claims 1 to 4, wherein the combustion air mass flow rate is between 101 and 150% of the fumes mass flow rate in a combustion fumes discharge conduit (100).

6. The method according to claim 5, wherein the combustion air mass flow rate is between 120 and 140% of the fumes mass flow rate in the combustion fumes discharge conduit (100).

7. The method according to one of claims 1 to 6, wherein the air flow rate in the combustion air circuit (20) is regulated by a fan (200) provided on the combustion air circuit (20), depending on measurements from a humidity or acidity sensor provided in the separation means (30).

8. The method according to one of claims 1 to 7, wherein the fumes have a temperature between 120°C and 160 °C at the inlet of the first exchanger (21).

9. The method according to one of claims 1 to 8, comprising subsequently to the combustion step, steps of:
- exchanging heat between the fumes and a coolant of a main circuit (13);
- exchanging heat between the fumes and the coolant of the main circuit (13) by heat exchange at an economiser (14), so as to pre-heat the coolant of the main circuit (13).

10. The method according to claim 9, further comprising a step of exchanging heat between the combustion air exiting the first exchanger (21) and the coolant of a branch (130) of the main circuit (13) at a second exchanger (22).

11. The method according to one of claims 9 and 10, wherein the coolant is water, the method comprising generating power by power generating means driven by at least one vapour expansion turbine of the main circuit (13).

12. The method according to one of claims 1 to 11, comprising a prior step of circulating the fuel in a dryer supplied with heat via the combustion air circuit (20).

13. The method according to one of claims 1 to 12, wherein the first exchanger (21) is of the wheel exchanger type.

14. The method according to one of claims 1 to 13, wherein the separation means (30) consist of a cyclone or a mist eliminator.
